# FASCICULE DE BREVET EUROPEEN

(11) **EP 3 343 425 B1**
(45) Date de publication et mention de la délivrance du brevet: **06.03.2019**
(21) Numéro de dépôt: 17210750.0
(22) Date de dépôt: 27.12.2017
(51) Int. Cl.: G06F 21/60, G06F 21/31, G06F 21/62, H04L 9/06, H04L 29/06

(54) **SYSTÈME ET PROCÉDÉ POUR LA CRÉATION ET LA GESTION D'AUTORISATIONS DÉCENTRALISÉES POUR DES OBJETS CONNECTÉS**
SYSTEM UND VERFAHREN ZUR ERZEUGUNG UND VERWALTUNG VON DEZENTRALISIERTEN GENEHMIGUNGEN FÜR VERBUNDENE OBJEKTE
SYSTEM AND METHOD FOR THE CREATION AND MANAGEMENT OF DECENTRALIZED AUTHORIZATIONS FOR CONNECTED OBJECTS

(30) Priorité: 28.12.2016 FR 1663485
(43) Date de publication de la demande: 04.07.2018
(73) Titulaire: BULL SAS, 78340 Les Clayes sous Bois (FR)
(72) Inventeur: LEPORINI, David, 94150 Rungis (FR); PIRON, Charles, 69006 Lyon (FR)
(74) Mandataire: A.P.I. Conseil

(56) Documents cités:
- AZARIA ASAPH ET AL: "MedRec: Using Blockchain for Medical Data Access and Permission Management", 2016 2ND INTERNATIONAL CONFERENCE ON OPEN AND BIG DATA (OBD), IEEE, 22 août 2016 (2016-08-22), pages 25-30, XP032969608, DOI: 10.1109/OBD.2016.11
- GUY ZYSKIND ET AL: "Decentralizing Privacy: Using Blockchain to Protect Personal Data", 2015 IEEE SECURITY AND PRIVACY WORKSHOPS, 1 mai 2015 (2015-05-01), pages 180-184, XP055359413, DOI: 10.1109/SPW.2015.27 ISBN: 978-1-4799-9933-0
- YUE XIAO ET AL: "Healthcare Data Gateways: Found Healthcare Intelligence on Blockchain with Novel Privacy Risk Control", JOURNAL OF MEDICAL SYSTEMS, PLENUM PUBLISHING CO, NY, USA, vol. 40, no. 10, 26 août 2016 (2016-08-26) , pages 1-8, XP036060390, ISSN: 0148-5598, DOI: 10.1007/S10916-016-0574-6 [extrait le 2016-08-26]

## Description

La présente invention concerne le domaine de l'identité unique des objets connectés et la gestion de leurs autorisations d'accès. Plus particulièrement, la présente invention permet l'identification, l'authentification et la fourniture d'autorisation en utilisant un système distribué, décentralisé et auditable. L'invention concerne un système informatique de création et de gestion d'autorisations d'accès pour des objets connectés ainsi qu'un procédé pouvant être mis en oeuvre par ledit système.

### [Art antérieur]

Il existe de nombreuses solutions informatiques permettant la gestion des autorisations et des identités des objets connectés. En général, ces solutions sont basées sur une plateforme de gestion unique et centralisée. La confiance en cette solution est généralement assurée par la réputation et les règles que s'impose cette plateforme centralisée. Toutefois, une telle centralisation induit des problématiques de sécurisation des données aussi bien en termes de perte de données que de modification non autorisée de leur intégrité.

Il existe des bases de données pour assurer le stockage d'autorisations où les données sont réparties sur quelques sites ou chez quelques acteurs mais ces bases de données se basent sur le principe d'un référentiel unique répliqué à plusieurs endroits. Par exemple, les bases de données distribuées comme les bases NoSQL (par exemple Cassandra) reposent sur une base de référence unique, appelée « maître », qui est répliquée et donc partagée sur chacun des sites. Lorsque le nombre d'acteurs est important, un tel mécanisme basé sur la réplication devient trop complexe à mettre en oeuvre et voit ses performances fortement réduites ou sa cohérence non garantie. Ainsi, ceci ne répond pas au besoin émergeant lié à la volumétrie des objets connectés, et des besoins de décentralisation, de contrôle et d'audit des autorisations d'accès qui rendrait des solutions classiques de réplication trop complexe à mettre en oeuvre. En outre, la gouvernance de ce type d'architecture est unique : un acteur restant maître et les autres esclaves. De ce fait, l'acteur principal a un rôle différent de ceux des autres acteurs. Pourtant, dans certaines situations, il n'est pas possible ou souhaitable de disposer d'une plateforme centralisée même si elle est répliquée. Par exemple, dans le cas d'un processus multi-acteurs, c'est-à-dire impliquant des entités juridiques distinctes (plusieurs entreprises, etc.), il n'est pas toujours facile, juridiquement ou commercialement, de décider d'un acteur qui jouera le rôle central d'hébergeur de la plateforme.

L'évolution exponentielle du nombre des objets connectés et de ces plateformes centralisées entraine une complexification de la gestion des identités et des autorisations aussi bien pour les utilisateurs que pour les plateformes. D'autant que les systèmes existants sont généralement spécialisés sur une catégorie d'objet connectés pour laquelle ils gèrent l'identité et les autorisations et que ces systèmes contrôlés par un tiers ne permettent pas aux utilisateurs de migrer aisément leur identité et/ou leur preuve d'autorisation vers d'autres systèmes.

L'utilisation d'une chaine à blocs permet la sécurisation des données car à partir du moment où elles sont diffusées dans la communauté, ces données ne peuvent pas être réécrites, donc falsifiées. Cet aspect communautaire permet de se passer d'un tiers de confiance unique ou d'une autorité de contrôle, la validation synchronisée des données servant de garantie. Ainsi, il existe des systèmes informatiques de gestion de transactions basés sur des chaines à blocs tel que par exemple le système décrit dans la demande de brevet WO2016197055 ou la demande de brevet US20160261690. Néanmoins, ces systèmes reposent sur une gestion d'objets connectés s'affranchissant d'une autorité de contrôle et faisant reposer la confiance dans le système sur un grand nombre de participants et un consensus cryptographiquement vérifiable de son contenu.

Le document "MedRec: Using Blockchain for Medical Data Access and Permission Management", 2016 2nd International Conférence on Open and Big Data, décrit l'utilisation de la technologie de chaine à blocs pour la gestion d'autorisations dans le domaine des données de santé.

Il en ressort qu'il n'existe pas de solution satisfaisante permettant d'assurer la gestion des autorisations d'accès et des identités impliquant plusieurs acteurs. Ainsi, il existe un besoin pour de nouveaux systèmes et procédés de gestion des autorisations pour objets connectés répondant à ce problème.

### [Problème technique]

L'invention a donc pour but de remédier aux inconvénients de l'art antérieur en proposant un système et un procédé de création et de gestion d'autorisation pour objets connectés qui soient décentralisés, distribués et auditables. En particulier, l'invention a pour but de proposer un système, géré par un nombre contrôlé d'entités de gouvernance, permettant de gérer les autorisations d'accès d'un objet connecté à un ensemble de services très divers. Ce système et ce procédé présentent de nombreux avantages tels que : forte interopérabilité, forte résilience, confidentialité, autonomie, assurance d'une intégrité des données, et traçabilité.

### [Brève description de l'invention]

A cet effet, l'invention porte sur un système informatique de création d'autorisations, d'attributions et de gestion desdites d'autorisations pour des objets connectés comportant :
- une pluralité de serveurs de stockage comprenant une chaine à blocs distribuée sous la forme de noeuds de stockage, lesdits serveurs de stockage 20 étant aptes à enregistrer un nouveau bloc 202 sur la chaine à blocs 200 ;
- un module de contrôle d'accès étant configuré pour définir un droit d'accès à la chaine à blocs, pour un utilisateur du système, ledit droit d'accès étant sélectionné parmi une liste comprenant au moins :
   ∘ un droit d'accès comportant seulement un droit de lecture, et
   ∘ un droit d'accès comportant un droit d'enregistrement de nouveaux blocs de la chaine à blocs sur un noeud de stockage, l'utilisateur possédant un tel droit étant appelé une entité de gouvernance ;
- un module d'inscription pour la création d'autorisation apte à :
   ∘ recevoir des données d'exécution de contrat intelligent, émises par une entité de gouvernance 70, lesdites données d'exécution de contrat intelligent comportant un identifiant unique du contrat intelligent, des conditions d'applications du contrat intelligent et au moins une autorisation conditionnelle associée au contrat intelligent, et
   ∘ inscrire lesdites données d'exécution de contrat intelligent sur un noeud de stockage de ladite chaine à blocs ; et
- un module de connexion pour l'attribution d'autorisation apte à :
   ∘ recevoir des données de connexion entre un objet connecté et une entité tiers, lesdites données de connexion comportant au moins une requête d'autorisation,
   ∘ identifier sur un noeud de stockage de la chaine à blocs une autorisation conditionnelle complémentaire à ladite requête d'autorisation,
   ∘ vérifier les conditions d'applications comprises dans les données d'exécution du contrat intelligent, et
   ∘ générer une instruction d'attribution d'autorisation faisant droit à la requête d'autorisation seulement si toutes les conditions d'applications de ladite autorisation conditionnelle sont vérifiées.

Les solutions antérieures permettant la gestion des autorisations d'objets connectés sont généralement centralisées du fait des besoins d'identification maitrisée et centralisée pour l'accès à certaines fonctionnalités ou services. La présente invention va l'encontre de cela en proposant un système dans lequel la gestion des identités est distribuée et décentralisée, permettant une gestion évolutive des autorisations d'accès à des services offerts par différents acteurs. Pour cela, une chaine à blocs, habituellement utilisée dans un cadre ouvert, est mise en oeuvre dans un système modifiable par un nombre contrôlé et limité d'utilisateurs ayant un droit d'enregistrement de nouveaux blocs de la chaine à blocs et aussi appelés entités de gouvernance. En outre, la chaine à blocs peut présenter l'avantage de comporter des données au moins partiellement chiffrée.

L'invention porte en outre sur un procédé de création et de gestion d'autorisations pour des objets connectés, mis en oeuvre par un système informatique comprenant une chaine à blocs distribuée sous la forme de noeuds de stockage, lesdits serveurs de stockage étant aptes à enregistrer un nouveau bloc sur la chaine à blocs, un module de contrôle d'accès, un module d'inscription, et un module de connexion, ledit procédé comprenant les étapes de :
- Définition, par un module de contrôle d'accès, d'un droit d'accès à la chaine à blocs, pour un utilisateur, ledit droit d'accès étant sélectionné parmi une liste comprenant au moins :
   ∘ un droit d'accès comportant seulement un droit de lecture, et
   ∘ un droit d'accès comportant un droit d'enregistrement de nouveaux blocs de la chaine à blocs, l'utilisateur possédant un tel droit étant appelé une entité de gouvernance ;
- Réception, par le module d'inscription, de données d'exécution de contrat intelligent, émises par une entité de gouvernance, lesdites données d'exécution de contrat intelligent comportant un identifiant unique, des conditions d'applications du contrat intelligent et au moins une autorisation conditionnelle associée au contrat intelligent,
- Inscription desdites données d'exécution de contrat intelligent sur un noeud de stockage de ladite chaine à blocs,
- Réception, par un module de connexion, de données de connexion, lesdites données de connexion comportant au moins une requête d'autorisation,
- Identification d'une autorisation conditionnelle complémentaire à ladite requête d'autorisation dans les données d'exécution de contrat intelligent inscrites sur un noeud de stockage de la chaine à blocs, ladite autorisation conditionnelle étant associée à des conditions d'applications,
- Vérification desdites conditions d'applications comprises dans les données d'exécution de contrat intelligent, et
- Génération d'une instruction d'attribution d'autorisation faisant droit à la requête d'autorisation seulement si toutes les conditions d'applications de ladite autorisation conditionnelle sont vérifiées.

D'autres avantages et caractéristiques de l'invention apparaitront à la lecture de la description suivante donnée à titre d'exemple illustratif et non limitatif, en référence aux Figures annexées qui représentent :
- Figure 1, un schéma du système informatique de création et de gestion d'autorisations pour objets connectés selon l'invention.
- Figure 2, un schéma de l'organisation des serveurs de stockage et du contenu de la chaine à blocs selon l'invention.
- Figure 3, les différentes étapes du procédé de création et de gestion des autorisations selon l'invention. Les étapes en pointillées sont optionnelles.
- Figure 4, un schéma d'un mode de réalisation selon l'invention portant sur la création et la gestion d'autorisation d'accès pour un véhicule connecté.

### [Description de l'invention]

Dans la suite de la description, on parlera indifféremment « d'autorisation d'accès » et pour simplifier d'« autorisation ». Ainsi, on entend par « autorisation » une donnée ou un ensemble de données spécifiant un droit de communication, de mise en relation, de partage ou d'accès à une ressource. La ressource peut par exemple être une donnée, un fichier, un ensemble de fichiers, une application, un service, de la matière ou un dispositif tel qu'un objet connecté. Une « autorisation conditionnelle » est une autorisation associée à des conditions d'application. Les conditions d'application correspondent à des règles de contrôle utilisées pour valider ou non une requête d'autorisation.

On entend par « requête d'autorisation » une demande d'accès à une ressource. Cette requête est généralement générée lors d'une connexion entre un objet connecté et une entité tiers.

On entend par «objet connecté» tout dispositif électronique apte à se connecter à un réseau de communication. Le réseau de communication peut être par exemple un réseau internet ou un réseau intranet. La connexion peut être réalisée par de nombreux moyens de communications tels que les connexions filaires ou les connexions sans fil (par exemple Wifi ou Bluetooth).

On entend par « bloc» un ensemble de données validées relatives par exemple à des autorisations, des contrats intelligents, des objets ou des tiers. Chaque bloc est horodaté et fait référence à un bloc précédent (excepté le premier bloc). Cette référence se fait généralement par l'inclusion, au sein des données du bloc, d'une empreinte correspondant au bloc précédant, l'empreinte sera désignée dans la suite par le terme « hash » plus classiquement utilisé. Ceci permet d'assurer que les données d'un bloc antérieur n'ont été pas modifiées et que, dans le cadre d'une chaine à blocs, les blocs se succèdent dans un ordre chronologique. Ainsi, on entend par « chaine à blocs », un enchainement de blocs.

On entend par « Hash » le résultat d'une fonction de hachage. C'est une empreinte permettant d'identifier rapidement la donnée source. La fonction de hachage permet de réduire la taille d'un ensemble de données source par un procédé cryptographique et lui attribuer, une empreinte unique, un hash, qui ne peut correspondre qu'à cet ensemble particulier de données source. Par contre, il n'est pas possible à partir d'un hash de déduire l'ensemble des données sources.

On entend par « noeuds de stockage » des répliques de la chaine à blocs enregistrées sur des serveurs de stockage.

On entend par «serveur de stockage» un dispositif comportant une mémoire non transitoire et étant apte à se connecter à un réseau de communication.

On entend par « contrat intelligent » un ensemble de données plus connu sous la terminologie anglo-saxonne de « smart contract ». Cet ensemble de données correspond plus particulièrement à un ensemble de données d'exécution et permet de définir au moins les conditions d'attribution d'une autorisation. Dans la suite, les données d'exécution relatives à un contrat intelligent comprennent un identifiant unique du contrat intelligent, des conditions d'applications du contrat intelligent et au moins une autorisation conditionnelle associée au contrat intelligent.

On entend par « instruction » ou instruction informatique, des données définissant un ou plusieurs actions pouvant être mises en oeuvre par un dispositif électronique.

On entend par « utilisateur », un utilisateur du système informatique.

On entend par « connexion » une communication, un accès, ou plus généralement une mise en relation entre deux ressources soumise à autorisation et conditions.

Dans la suite de la description, les mêmes références sont utilisées pour désigner les mêmes éléments.

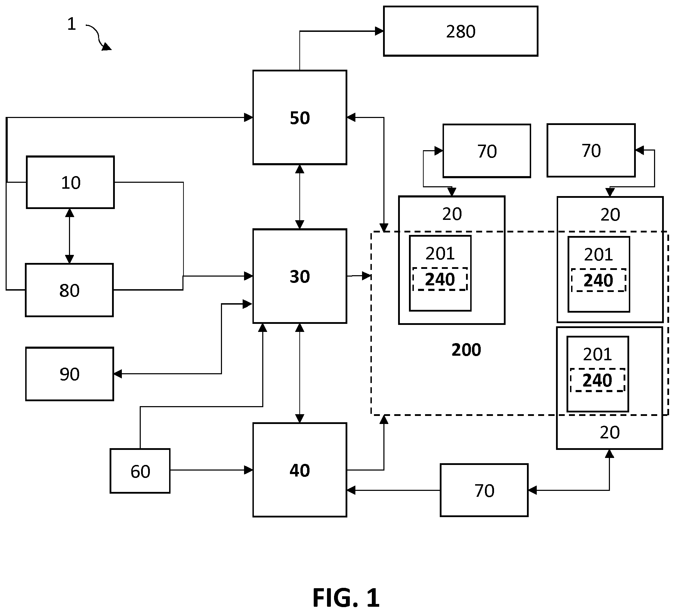

La **Figure 1** schématise le système informatique 1 de création et de gestion d'autorisation pour objets connectés selon l'invention.

Ce système repose sur une **pluralité de serveurs de stockage 20** comprenant une **chaine à blocs 200** distribuée sous la forme de **noeuds de stockage 201**.

Cette **pluralité de serveurs de stockage 20** peut être retrouvée dans de nombreux systèmes incluant des chaines à blocs. La distribution de la chaine à blocs 200 sous la forme de noeuds de stockage 201 présente l'avantage de conférer à ladite chaine à blocs 200 des propriétés de résilience en cas d'attaque sur un des noeuds de stockages 201. Une telle distribution comportant une succession de blocs 202 permet également au système de posséder une résistance importante à la falsification de données. Ces serveurs de stockage 20 enregistrent généralement les données sur des mémoires non-volatiles et peuvent également comporter des mémoires transitoires.

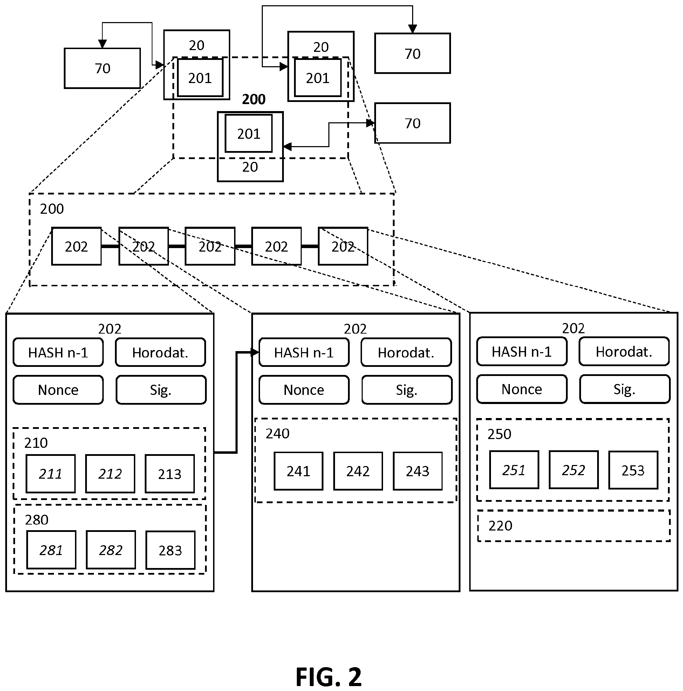

Comme cela est détaillé sur la **figure 2****,** la **chaine à blocs 200** est composée d'une pluralité de **blocs 202** ordonnés de façon chronologique. Les serveurs de stockage 20 sont aptes à enregistrer un nouveau bloc 202 sur la chaine à blocs 200. Dans le cadre de l'invention, cet enregistrement peut être conditionné à la réception d'une instruction d'enregistrement émise par un utilisateur ayant les droits adéquats. Comme cela sera détaillé dans la suite, un tel utilisateur est appelé entité de gouvernance. Chacun des **blocs 202** peut être utilisé pour stocker une grande diversité de données. Dans le cadre de l'invention, la chaine à blocs 200 et plus particulièrement les blocs 202 de la chaine à blocs 200 peuvent être utilisés pour stocker des **données d'objet 210** relatives aux objets connectés 10, des **données de tiers 280** relatives aux entités tiers 80, des **données d'exécution de contrat intelligent 240** relatives aux contrats intelligents.

Les données d'objet 210 peuvent comporter au moins: un identifiant unique d'objet 211 et un profil d'objet 212. Par exemple, le profil d'objet 212 peut comporter des données pouvant être sélectionnées parmi son statut, son origine, son propriétaire initial, ses caractéristiques physiques, ses fonctionnalités ou ses permissions. Les données d'objet 210 peuvent également comporter des données de contexte 213 telles que par exemple la localisation géographique de l'objet. L'objet connecté 10 peut être tout dispositif électronique apte à se connecter à un réseau de communication. L'objet connecté 10 peut comporter un contrôleur d'accès logique et/ou un contrôleur d'accès physique aptes à donner accès à une ressource conformément à une instruction d'attribution d'autorisation 220. De préférence, l'objet connecté 10 comporte un contrôleur d'accès physique. De façon particulière, l'objet connecté 10 est apte, à partir d'un droit d'accès logique tel qu'une instruction d'attribution d'autorisation 220, à induire la matérialisation d'un droit d'accès physique via un contrôleur d'accès physique. Ainsi, de façon préférée l'objet connecté 10 comporte un actionneur physique associé à un contrôleur d'accès physique. De façon plus préférée, l'objet connecté 10 est sélectionné parmi : une vanne connectée, un véhicule connecté, une barrière d'accès à un parking, un interrupteur connecté. La vanne connectée est un dispositif destiné à contrôler le débit d'un fluide tel qu'un liquide ou un gaz. Elle peut par exemple être une vanne industrielle ou un compteur d'eau ou de gaz de particulier. De façon particulière, l'objet connecté 10 comporte au moins un contrôleur logique ou physique et est sélectionné parmi : une vanne connectée, un véhicule connecté et un interrupteur connecté. De façon préférée, l'objet connecté 10 est sélectionné parmi : une vanne connectée, un véhicule connecté et un interrupteur connecté.

Les données de tiers 280 peuvent comporter au moins : un identifiant unique de tiers 281 et un profil de tiers 282. Par exemple, le profil de tiers 282 comporte des données pouvant être sélectionnées parmi son statut, son origine, ses caractéristiques physiques, ses fonctionnalités ou ses permissions. L'entité tiers est généralement sélectionnée parmi : un autre objet connecté, un utilisateur, une donnée, un fichier ou un ensemble de fichier ou un service par exemple sous la forme d'une application. Les données de tiers 280 peuvent également comporter des données de contexte 283 telles que par exemple la localisation géographique de l'entité tiers.

Les données d'exécution de contrat intelligent 240 comportent au moins : un identifiant unique 241 du contrat intelligent, des conditions d'applications 242 du contrat intelligent et au moins une autorisation conditionnelle 243 associée au contrat intelligent. Par exemple, les conditions d'applications 242 du contrat intelligent peuvent comporter des conditions sélectionnées parmi : une condition de paiement, une condition temporelle, une condition de localisation et une condition de sécurité. L'autorisation peut quant à elle par exemple faire référence au droit d'accéder à une application, au droit d'accéder à une donnée ou un fichier, autoriser l'accès par l'objet à un service de l'entité tiers, autoriser l'accès par l'entité tiers à une fonctionnalité ou des données de l'objet. L'invention permet par exemple, lorsqu'elle définit les interactions entre un objet et un utilisateur, d'autoriser un utilisateur à utiliser certaines fonctionnalités de l'objet connecté, les administrer, ou changer l'utilisateur « propriétaire ». L'invention permet par exemple, lorsqu'elle définit les interactions entre objets, d'attribuer une autorisation de façon à sécuriser les échanges de données en confidentialité et intégrité. L'invention peut également être utilisée pour vérifier les conditions de sécurité nécessaires à l'accès à un service par l'objet, et notifier des conditions non satisfaites en cas de refus.

De façon avantageuse, l'autorisation conditionnelle peut comporter une limite dans le temps.

De préférence, la chaine à blocs 200 comporte des données chiffrées et des données non chiffrées. Par exemple, au moins une partie des données de tiers 280, d'exécution de contrat intelligent 240 et/ou d'objet 210 sont chiffrées avant enregistrement sur un noeud de stockage 201 de chaine à blocs 200. De préférence, les données chiffrées l'ont été par des méthodes de chiffrement asymétriques.

Les noeuds de stockage 201 correspondent à des copies de la chaine à blocs 200. Chacun des noeuds de stockage 201 présente de préférence une importance équivalente et il n'existe pas de relation maitre-esclaves entre ces noeuds de stockage. Néanmoins, le système peut comporter des noeuds de stockage 201, gérés par des entités de gouvernance 70, qui ont la possibilité d'introduire de nouveaux blocs 202 dans la chaine à blocs 200 ainsi que des noeuds de stockage 201, n'étant pas gérés par des entités de gouvernance 70, et donc qui sont dans l'incapacité d'introduire de nouveaux blocs 202 dans la chaine à blocs 200. Les serveurs de stockage 20 comportant des noeuds de stockage 201, n'étant pas gérés par des entités de gouvernance 70, permettent d'assurer une réplication de la chaine à blocs 200 et améliorent ainsi la résilience du système. Par exemple, une partie des objets connectés 10 peuvent être associés à un noeud de stockage 201 dédié. Les serveurs de stockage 20 comportant des noeuds de stockage 201 gérés par des entités de gouvernance 70, permettent d'assurer une réplication de la chaine à blocs 200 mais surtout l'intégration de nouvelles données dans la chaine à bloc 200 grâce à l'enregistrement de nouveaux blocs 202 par les entités de gouvernances 70. De plus, dans le cadre de l'invention, le système informatique 1 comporte un nombre restreint de noeuds de stockages 201 gérés par des entités de gouvernance 70. En effet, une des particularités de l'invention est de se détacher des systèmes classiques de chaînes à blocs qui repose sur une confiance générée par la présence d'une multitude de noeuds de stockage 201 ayant la capacité à inscrire de nouveaux blocs 202, chacun ayant une faible probabilité d'être le noeud de stockage implémentant un nouveau bloc 202 sur la chaine à blocs 200. Ainsi, de préférence, le système informatique 1 selon l'invention comporte entre 2 et 2000 serveurs de stockage 20 gérés par des entités de gouvernance 70, de façon plus préférée entre 2 et 1000 serveurs de stockage 20 gérés par des entités de gouvernance 70, et de façon encore plus préférée entre 2 et 500 serveurs de stockage 20 gérés par des entités de gouvernance 70.

Classiquement, les noeuds de stockage des chaines à blocs peuvent être anonymes et sont ouverts à tous les utilisateurs. Lorsqu'un noeud de stockage reçoit une nouvelle transaction, il l'enregistre dans un support de mémoire comportant un ensemble de transactions non confirmées. Bien que les transactions non confirmées soient propagées sur le réseau de communication, cet ensemble peut différer d'un noeud à l'autre, du fait du temps de propagation des transactions sur le réseau. Ainsi, les systèmes antérieurs sont basés sur des transactions et n'importe quel noeud peut collecter un certain nombre de requête d'inscription de transaction dans sa liste puis former un bloc. La confiance est apportée par le fait qu'aucune entité ne dispose d'une autorité supérieure sur le système, que l'enregistrement d'un bloc est soumis à une variable aléatoire et qu'il existe un contrôle réciproque réalisé par les mineurs. Les mineurs sont les entités en charge dans les systèmes classiques de la mise à jour de la base de données décentralisée, cette mise à jour nécessitant la résolution d'un problème mathématique chronophage par les hébergeurs des noeuds de stockage complets.

Contrairement aux systèmes antérieurs, le système comporte avantageusement des **entités de gouvernance 70** qui sont les seules à posséder le droit d'enregistrer un nouveau bloc 202 sur la chaine à bloc 200. Cette particularité est à la base de la confiance dans le système 1 selon l'invention. Ainsi, chaque entité de gouvernance 70 administre un support mémoire comportant un ensemble de données non confirmées. Ces données peuvent correspondre par exemple à des données d'objet 210, à des données de tiers 280 ou à des données d'exécution de contrat intelligent 240. Ces données non confirmées peuvent être partagées entre les entités de gouvernance 70.

L'entité de gouvernance 70 contrôle la validité des données non confirmées puis une fois le bloc validé, il est horodaté et ajouté à la chaîne de blocs. Le contenu de ce bloc 202 est alors accessible aux utilisateurs selon les modalités définies par le module de contrôle d'accès.

Les règles de validation du bloc 202 peuvent être variables en fonction des modes de réalisations et d'établissement de consensus. Par exemple, un bloc 202 peut être validé par une entité de gouvernance 70 sans que cela nécessite de rechercher un nombre aléatoire (Nonce) ayant une valeur telle que le hash du bloc à valider réponde à des règles particulières. Au contraire, il peut nécessiter une preuve de travail comme cela est visible sur d'autre système utilisant les chaines à blocs. Selon un autre mode de réalisation, un bloc peut aussi être validé suite à l'accord d'au moins deux, de préférence au moins quatre entités de gouvernance 70 et cela sans qu'une preuve de travail ne soit exigée, ou encore par un vote majoritaire.

Comme cela est présenté dans la figure 2, un bloc 202 validé comporte le Hash du bloc précédant sur la chaine à blocs (HASH n-1), et il peut également contenir une signature (Sig.), un horodatage (Horodat.), et/ou un nombre aléatoire (Nonce). Une fois validé, le contenu de ce bloc est alors accessible aux utilisateurs 60 selon les modalités définies par le module de contrôle d'accès 30.

Ces modes de validations particuliers sont possibles car le système est basé sur la confiance entre les entités de gouvernance 70 et la confiance des utilisateurs 60 envers les entités de gouvernance 70. Ainsi, le système selon l'invention regroupe les avantages de décentralisation et de distribution des chaines à blocs tout en conservant la sécurité des systèmes centralisés.

Ainsi, de préférence, le système informatique 1 selon l'invention est connecté à, entre 2 et 2000 entités de gouvernance 70, de façon plus préférée entre 2 et 1000 entités de gouvernance 70 et de façon encore plus préférée entre 2 et 500 entités de gouvernance 70.

Au contraire les systèmes classiques utilisant des chaines à blocs 200 pour suivre des transactions sont connectés à plusieurs milliers de mineurs en charge de valider les blocs 202.

En complément des entités de gouvernance 70, le système 1 selon l'invention est de préférence apte à communiquer avec des entités d'audit 90. Les entités d'audit 90 possèdent un droit d'accès comportant un droit de lecture et un accès à des clés de déchiffrement de façon à pouvoir auditer tout ou partie des données chiffrées. De façon particulière, une entité d'audit 90 peut posséder un droit d'accès comportant un droit de lecture et un accès à des clés de déchiffrement de façon à pouvoir auditer toutes les données chiffrées.

Afin de permettre l'attribution de droits particuliers aux différents utilisateurs du système 1 selon l'invention, l'invention repose sur une architecture telle que, bien que le système soit décentralisé et bénéficie ainsi des avantages classiques des chaines à blocs distribuées, le système selon l'invention inclut un **module de contrôle d'accès 30** configuré pour définir les droits d'accès d'un utilisateur 60 à la chaine à blocs 200.

En effet, contrairement à la plupart des chaines à blocs, dans le système 1 selon l'invention, la chaine à blocs 200 présente des droits d'accès différents en fonction de l'utilisateur 60. Ainsi, le module de contrôle d'accès 30 est configuré pour définir un droit d'accès, ledit droit d'accès étant sélectionné parmi une liste de droit d'accès comprenant au moins :
- un droit d'accès comportant seulement un droit de lecture. Ce droit peut être accordé à une majorité des utilisateurs.
- un droit d'accès comportant un droit d'enregistrement de nouveaux blocs 202 de la chaine à blocs 200. L'enregistrement de nouveaux blocs 202 de la chaine à blocs 200 permet de valider les autorisations et/ou les données en attente. C'est cet enregistrement qui confirme la validité de ces données et leur acceptation. Ce droit d'enregistrement dans le cadre de la présente invention peut être donné à plusieurs entités de gouvernance 70. De façon préférée, le système selon l'invention comporte un nombre contrôlé d'entités de gouvernance 70, garantes d'une partie importante de la confiance accordée au système. Par contre, le nombre d'entité de gouvernance 70 ayant des droits d'enregistrement est plus faible que celui observé dans de nombreux systèmes basés sur une chaine à blocs. Ainsi, de préférence, le module de contrôle d'accès 30 selon l'invention est configuré pour accorder entre 2 et 2000 droits d'enregistrement de nouveaux blocs 202 de la chaine à blocs 200, de façon plus préférée entre 2 et 1000 et de façon encore plus préférée entre 2 et 500. Cela correspond à un droit accordé aux entités de gouvernance 70.

Des droits d'accès supplémentaires peuvent être accordés par ce module de contrôle d'accès 30. Ainsi, la liste de droit d'accès peut comprendre également :
- un droit d'accès comportant un droit d'écriture. Ce droit permettant par exemple à l'utilisateur en disposant d'inscrire de nouvelles données d'objet 210, de tiers 280 ou d'exécution de contrat intelligent 240 sur la chaine à blocs 200, et/ou,
- un droit d'accès comportant un droit de lecture et un accès à des clés de déchiffrement. Ce droit peut être accordé à une entité d'audit 90 de façon à vérifier au moins une partie des autorisations accordées et plus généralement des données stockées sur la chaine à blocs 200.

Le module d'accès 30 peut être configuré de façon à accorder un droit d'accès comportant seulement un droit de lecture même si l'utilisateur n'est pas authentifié.

En outre, le module de contrôle d'accès 30 peut être configuré pour accorder un nombre limité de droit d'accès comportant un droit d'écriture. Par exemple, le module de contrôle d'accès 30 est configuré pour accorder moins de 1000 droits d'accès comportant un droit d'écriture, de préférence moins de 500. Cela permet notamment de limiter le nombre d'utilisateurs pouvant écrire dans le référentiel et ainsi de renforcer la sécurité.

Le droit d'écriture permet à l'utilisateur en disposant d'inscrire de nouvelles données sur la chaine à blocs 200. Par contre, ce droit ne permet pas de rendre ses données pérennes et d'enregistrer un nouveau bloc 202 dans la chaine à blocs 200. Ainsi, suite à l'inscription, ces nouvelles données sont placées sur la chaine à blocs 200 au sein d'un ensemble de données non confirmées. Une entité de gouvernance 70 contrôle la validité des données non confirmées puis une fois ces données validées elles sont enregistrés sur un nouveau bloc 202 horodaté de la chaîne de blocs 200. Le contenu de ce bloc 202 est alors accessible aux utilisateurs selon les modalités définies par le module de contrôle d'accès 30.

De préférence, outre un droit d'enregistrement de nouveaux blocs 202 de la chaine à blocs 200, une entité de gouvernance 70 possède également, sur la chaine à blocs 200, un droit d'écriture et de lecture.

Les droits d'accès accordés aux entités d'audit 90 permettent de contrôler et d'auditer la chaine à blocs 200 et notamment les autorisations d'accès sur la chaine à bloc distribuée et partagée. De préférence, le droit d'accès comportant un droit de lecture et un accès à des clés de déchiffrement nécessite une authentification de l'entité d'audit 90 et le module de contrôle d'accès 30 n'accorde aucun droit d'accès à des clés de déchiffrement et à la chaine à blocs 200 à ladite entité d'audit 90 non authentifiée.

De la même façon, de préférence, l'enregistrement de nouveaux blocs 202 de la chaine à blocs 200 nécessite une authentification de l'entité de gouvernance 70 et le module de contrôle d'accès 30 n'accorde aucun droit d'accès comportant un droit d'enregistrement à ladite entité de gouvernance 70 non authentifiée.

De même que le système selon l'invention permet un contrôle de l'accès aux données de la chaine à blocs 200, l'invention repose sur une architecture telle que l'inscription des données d'exécution de contrat intelligent sur la chaine à bloc 200 est contrôlée par **un module d'inscription 40** configuré pour recevoir puis inscrire les données d'exécution de contrat intelligent 240 sur un noeud de stockage 201. Ainsi, le module d'inscription 40 est apte à :
- recevoir des données d'exécution de contrat intelligent 240, émises par une entité de gouvernance 70, lesdites données d'exécution de contrat intelligent 240 comportant un identifiant unique 241 du contrat intelligent, des conditions d'applications 242 du contrat intelligent et au moins une autorisation conditionnelle 243 associée au contrat intelligent,
- inscrire lesdites données d'exécution de contrat intelligent 240 sur un noeud de stockage 201 de ladite chaine à blocs 200.

Ainsi, le module d'inscription 40 permet de gérer des autorisations d'accès entre utilisateurs et objets, entre objets et pour les objets eux même.

De façon préférée, le module d'inscription 40 est apte à inscrire lesdites données d'exécution de contrat intelligent 240 sur un noeud de stockage 201 de ladite chaine à blocs 200 seulement si les données d'exécution de contrat intelligent 240 sont émises par une entité de gouvernance 70.

En outre, le module d'inscription 40 est également configuré pour recevoir puis inscrire les données d'objet 210 et les données de tiers 280 sur un noeud de stockage 201. Ainsi, le module d'inscription 40 est apte à :
- recevoir des données d'objet 210 et/ou de tiers 280,
- inscrire lesdites données d'objet 210 et/ou de tiers 280 sur un noeud de stockage 201 de ladite chaine à blocs 200.

Ainsi, le module d'inscription 40 permet également de gérer les identités et les profils d'objets connectés et de tiers interagissant avec ces objets connectés.

Plus particulièrement, le module d'inscription 40 est apte à recevoir des données d'objet 210, et/ou de tiers 280 émises par un utilisateur 60 et à les inscrire lesdites données d'objet 210 et/ou de tiers 280 sur un noeud de stockage 201 de ladite chaine à blocs 200 seulement si les données sont émises par un utilisateur possédant des droits d'écriture sur la chaine à bloc 200.

De façon avantageuse, le module d'inscription 40 est apte à authentifier l'identité de la source des données. Cela permet de s'assurer que l'identité et le profil d'un objet inscrit sur la chaine à blocs provient d'un utilisateur autorisé à de telles inscriptions et renforce ainsi la confiance pouvant être donnée à ces informations.

Une fois les données d'objet 210, de tiers 280 et/ou d'exécution de contrat intelligent 240 inscrites sur un noeud de stockage 201 de ladite chaine à blocs 200, le serveur de stockage 20 hébergeant ledit noeud de stockage 201 est apte à enregistrer un nouveau bloc 202 sur la chaine à blocs 200. Ce bloc comportant lesdites données d'objet 210, de tiers 280 et/ou d'exécution de contrat intelligent 240. Afin de renforcer la sécurité du système, de façon avantageuse, le serveur de stockage 20 hébergeant ledit noeud de stockage 201 est apte à enregistrer un nouveau bloc 202 sur la chaine à blocs 200 seulement s'il reçoit une instruction de validation desdites données, ladite instruction de validation étant émise par une entité de gouvernance 70.

Une fois les données inscrites sur la chaine à blocs par le module d'inscription 40, ces nouvelles données sont placées sur la chaine à blocs 200 au sein d'un ensemble de données non confirmées. Une entité de gouvernance 70 contrôle la validité des données non confirmées puis une fois ces données validées elles sont enregistrés sur un nouveau bloc 202 horodaté de la chaîne de blocs 200.

L'entité de gouvernance 70 contrôle la validité des données non confirmées puis une fois le bloc 202 validé, il est horodaté et ajouté à la chaîne de blocs 200. Le contenu de ce bloc 202 est alors accessible aux utilisateurs selon les modalités définies par le module de contrôle d'accès 30.

En outre, le module d'inscription 40 permet une gestion évolutive des autorisations d'accès à des services offerts par différents acteurs. En effet, le module d'inscription 40 est apte à inscrire de nouvelles données venant compléter ou modifier des relatives à des données d'objet 210, de tiers 280 et/ou d'exécution de contrat intelligent 240 déjà enregistrées dans la chaine à bloc 200.

De façon particulière, le module d'inscription 40 est également apte à inscrire sur la chaine à blocs 200 des données initialement externes à la chaine à blocs 200 pouvant être relatives à des services et qui seront nécessaires à l'exécution de certains contrats intelligents 240 car elles permettront de vérifier les conditions d'applications 242 comprises dans les données d'exécution de contrat intelligent 240.

Une fois les contrats intelligents inscrits sur la chaine à blocs 200, le système selon l'invention permet, grâce au **module de connexion 50,** la gestion des autorisations et notamment l'attribution d'une autorisation prédéfinie et conditionnelle suite à la connexion entre un objet connecté 10 et une entité tiers 80.

En effet, contrairement à la plupart des chaines à blocs, ce n'est pas des transactions qui sont gérées par le système 1 selon l'invention mais des autorisations, plus particulièrement des autorisations relatives à un objet connecté 10. Par exemple une autorisation relative à une interaction entre un objet connecté 10 et une entité tiers 80. Pour cela, le **module de connexion 50** est configuré pour :
- recevoir des données de connexion 250 entre un objet connecté 10 et une entité tiers 80, lesdites données de connexion 250 comportant au moins une requête d'autorisation 253,
- identifier sur un noeud de stockage 201 de la chaine à blocs 200 une autorisation conditionnelle 243 complémentaire à ladite requête d'autorisation 253,
- vérifier les conditions d'applications 242 comprises dans les données d'exécution de contrat intelligent 240,
- générer une instruction d'attribution d'autorisation 220 faisant droit à la requête d'autorisation 253 seulement si toutes les conditions d'applications 242 de ladite autorisation conditionnelle 243 sont vérifiées.

En outre, le module de connexion 50 peut être configuré pour enregistrer sur un noeud de stockage 201 de la chaine à blocs 200 les données de connexion 250. Le cas échéant cela permet d'assurer la traçabilité des connexions effectuées et l'audibilité du système. Les données de connexion peuvent également comprendre un identifiant unique 251 ainsi que des informations de contexte 252 à savoir par exemple les entités impliquées dans la requête d'autorisation 253.

La chaine à blocs 200 comporte toutes les données d'exécution de contrat intelligent validées par les entités de gouvernance 70 et, malgré l'impossibilité de modifier les blocs 202 antérieurs de la chaine à blocs 200, le système selon l'invention permet avantageusement une mise à jour des autorisations d'accès. Pour cela, de façon préférée, le module de connexion 50 est apte à vérifier en priorité les conditions d'applications 242 les plus récentes.

L'instruction d'attribution d'autorisation 220 peut être sélectionnée parmi : rupture de l'association entre l'objet connecté 10 et l'entité tiers 80 associée, autoriser l'accès par l'objet connecté 10 à un service de l'entité tiers 80, et autoriser l'accès par l'entité tiers 80 à une fonctionnalité ou des données de l'objet connecté 10.

De façon préférée, le module de connexion 50 est apte à transmettre l'instruction d'attribution d'autorisation à une machine virtuelle pour son exécution.

De plus, avantageusement, le module de connexion 50 est en outre apte à enregistrer l'instruction d'attribution d'autorisation 220 sur la chaine à blocs 200. En effet, le module de connexion 50 possède avantageusement des droits d'accès correspondant aux droits des entités de gouvernance 70 et donc un droit d'accès comportant un droit d'enregistrement de nouveaux blocs 202 de la chaine à blocs 200. Le cas échéant cela permet d'assurer la traçabilité des autorisations accordées et l'audibilité du système.

De façon particulière, le module de connexion 50 est apte à accéder à des données extérieures 280, n'étant pas inscrites ou enregistrées dans la chaine à blocs 200 mais néanmoins nécessaires à la vérification des conditions d'applications 242 comprises dans les données d'exécution de contrat intelligent 240.

Les modules de contrôle d'accès 30, d'inscription 40, et de connexion 50 peuvent avantageusement être hébergés dans des environnements d'exécution sécurisés. Cela est particulièrement avantageux dans le cadre de la mise en oeuvre d'opérations de déchiffrement des données (e.g. à des fins d'audit) par le module de contrôle d'accès 30 ou dans le cadre d'opérations de chiffrement des données par le module d'inscription 40. Les environnements d'exécution sécurisés peuvent être logiques (de type Trusted Execution Environnement, Secure Execution Environnement, ou SGX d'Intel). Les environnements d'exécution sécurisés peuvent être physiques (typiquement au sein d'Appliances de sécurité ou de Hardware Security Modules).

Selon un autre aspect, l'invention porte sur un procédé 2 de création et de gestion d'autorisations pour objets connectés 10.

Ce procédé peut être mis en oeuvre par un système informatique comprenant une chaine à blocs 200 apte à stocker des données d'exécution de contrat intelligent 240, un module de contrôle d'accès 30, un module d'inscription 40, et un module de connexion 50.

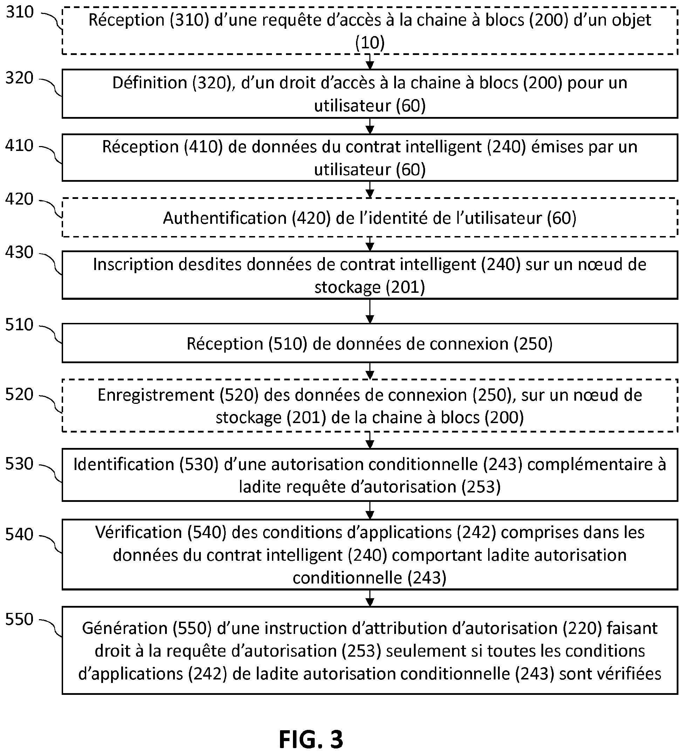

Les différentes étapes de ce procédé sont représentées dans les figures 3A à 3C. Ce procédé comporte une série d'étapes pouvant être regroupées en au moins 3 étapes principales :
- l'attribution de droits d'accès,
- la création ou la modification de contrat intelligent 240, et
- l'attribution d'autorisation.

Le procédé selon l'invention se distingue des procédés classiques notamment par la mise en place d'un haut niveau de contrôle sur la création et la gestion des autorisations. Pour réaliser un tel contrôle, le procédé 2 selon l'invention comporte les étapes suivantes relatives à l'attribution de droits d'accès :
- Réception 310 d'une requête d'accès à la chaine à blocs 200 émise par un utilisateur 60,
- Attribution 320, à l'utilisateur 60 par le module de contrôle d'accès 30 d'un droit d'accès à la chaine à blocs 200, ledit droit d'accès étant sélectionné parmi une liste comprenant au moins :
   ∘ un droit d'accès avec seulement un droit de lecture, et
   ∘ un droit d'accès comportant un droit d'enregistrement de nouveaux blocs de la chaine à blocs.

De préférence, le droit d'accès peut être sélectionné parmi une liste comprenant également :
- un droit d'accès avec un droit d'écriture, et
- un droit d'accès avec un droit de lecture et un accès à des clés de déchiffrement.

Le procédé selon l'invention inclut également les étapes suivantes relatives à la création ou la modification de contrat intelligent 240 :
- Réception 410, par le module d'inscription, de données d'exécution de contrat intelligent 240 émises par un utilisateur 60, lesdites données d'exécution de contrat intelligent 240 comportant un identifiant unique 241 du contrat intelligent, des conditions d'applications 242 du contrat intelligent et au moins une autorisation conditionnelle 243 associée au contrat intelligent, et
- Inscription 430 desdites données d'exécution du contrat intelligent sur un noeud de stockage 201 de ladite chaine à blocs 200 seulement le droit d'accès de l'utilisateur 60 comporte un droit d'écriture,

Le procédé selon l'invention inclut les étapes suivantes relatives à l'attribution d'autorisations:
- réception 510, par un module de connexion 50, de données de connexion 250, lesdites données de connexion 250 comportant au moins une requête d'autorisation 253,
- identification 530 d'une autorisation conditionnelle 243 complémentaire à ladite requête d'autorisation 253 dans les données d'exécution du contrat intelligent 240 inscrites sur un noeud de stockage 201 de la chaine à blocs 200, ladite autorisation conditionnelle 243 étant associée à des conditions d'applications 242,
- vérification 540 desdites conditions d'applications 242 comprises dans les données d'exécution du contrat intelligent 240, et
- génération 550 d'une instruction d'attribution d'autorisation 220 faisant droit à la requête d'autorisation 253 seulement si toutes les conditions d'applications 242 de ladite autorisation conditionnelle 243 sont vérifiées.

De préférence, le procédé peut également comprendre un enregistrement 520 des données de connexion 250, sur un noeud de stockage 201 de la chaine à blocs 200.

Le procédé selon l'invention peut inclure des étapes supplémentaires telles que :
- l'enrôlement 200 des utilisateurs 60,
- l'enregistrement 600 de blocs 202 sur la chaine à blocs 200,
- la révocation 700 d'une autorisation, et
- l'audit 900 des données de la chaine à blocs 200.

La révocation 700 d'une autorisation comprend les étapes suivantes :
- la génération 710, par une entité de gouvernance 70, de données de révocation de l'association entre un objet 10 et une entité tiers 80, lesdites données de révocation comportant une date et au moins une règle de comportement interdisant l'accès de l'objet 10 et à ladite entité tiers 80,
- l'inscription 720, par ladite entité de gouvernance 70, sur la chaine à blocs 200, desdites données de révocation, et
- l'enregistrement 730 par ladite entité de gouvernance 70 d'un nouveau bloc 202 sur la chaine à blocs distribuée comportant les données de révocation.

L'audit 900 des données de la chaine à bloc 200 comporte les étapes suivantes :
- Emission 910 d'une requête d'audit par une entité d'audit 90,
- Authentification 920 par le module de contrôle d'accès 30 de l'entité d'audit 90, et
- Transmission 930 à l'entité d'audit 90 par le module de contrôle d'accès 30 de clés de déchiffrement pour un déchiffrement partiel ou total de la chaine à blocs 200 si les droits d'accès de l'entité d'audit 90 ont été confirmés lors de l'authentification 920.

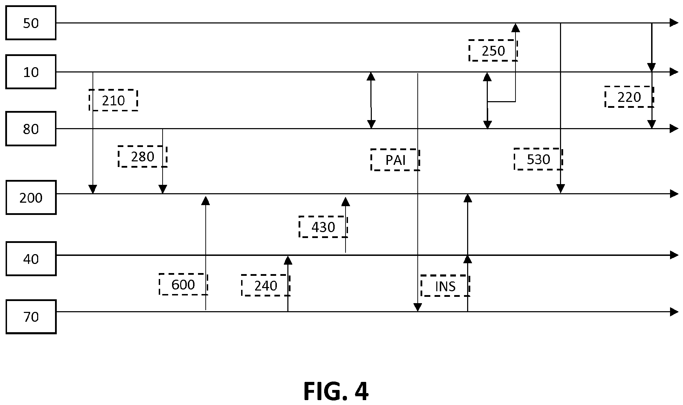

Dans le cadre d'un mode de réalisation particulier, illustré à la figure 4, où l'objet connecté 10 est une véhicule connecté, l'invention peut être mise au service d'un consortium de sociétés proposant des accès à des parkings 80 où chacune des sociétés est une entité de gouvernance 70 apte à modifier la chaine à blocs 200. A ce consortium peut venir s'ajouter d'autres sociétés proposant d'autres services adaptés à un véhicule connecté comme par exemple des compagnies d'assurance. Ainsi, chaque société proposant des services de parking et les compagnies d'assurance membres peuvent disposer d'un serveur de stockage 20 comprenant un noeud de stockage 201.

Les données d'objet 210 ont été inscrites sur la chaine à bloc par l'objet connecté 10. Le profil d'objet 212 peut comporter des données telles que l'identification du constructeur, le modèle, l'année de construction du véhicule mais également un identifiant relatif au propriétaire et/ou à l'utilisateur du véhicule ainsi que des données relatives à des services auxquels le véhicule est abonné. L'entité tiers 80 peut par exemple être un parking et les données de tiers 280 ont été inscrites sur la chaine à bloc 200 par une société de gestion de parking 70. Le profil de tiers 282 peut comporter des données sur le nombre de places, les restrictions à l'entrée pour ce parking (autorisations, hauteurs de véhicule...), et/ou la société en charge de la gestion du parking. Ces données d'objet 210 et de tiers 280 ont été, après validation par une entité de gouvernance, inscrite sur la chaine à bloc 200.

Dans le cadre de ce mode de réalisation particulier où l'objet connecté est un véhicule connecté, le parking bénéficie d'un droit d'accès comportant seulement un droit de lecture de la chaine à blocs 200, le véhicule bénéficie d'un droit d'accès comportant un droit, sur la chaine à blocs 200 de lecture et d'écriture tandis qu'une société 70 appartenant au consortium de société proposant des services de parking bénéficie d'un droit d'accès comportant un droit d'enregistrement de nouveaux blocs 202 de la chaine à blocs 200.

Lors de la création ou la modification 400 de contrat intelligent 240, la société de gestion de service du parking envoie au module d'inscription 40 des données d'exécution de contrat intelligent 240 comportant l'identifiant du contrat intelligent 241, les conditions d'applications 242 comportant par exemple une vérification du taux d'occupation du parking, la vérification du statut de l'abonnement du véhicule au service de parking et au moins une autorisation conditionnelle 243 correspondant par exemple à l'autorisation pour la voiture d'entrer dans le parking.

Une fois les données d'exécution de contrat intelligent 240 réceptionnées, le module d'inscription 40 procède à une authentification 420 de l'identité de la société de gestion du parking, et si cette identité est validée il procède à l'inscription desdites données d'exécution de contrat intelligent 430 sur un noeud de stockage 201 de ladite chaine à blocs 200. Ensuite, le serveur de stockage hébergeant le noeud de stockage 201 enregistre un nouveau bloc 202 sur la chaine à blocs 200. Ce bloc comportant lesdites données d'exécution de contrat intelligent 240.

Dans le cadre de ce mode de réalisation particulier, le véhicule connecté 10 peut déjà bénéficier d'un abonnement auprès d'une société de gestion de service du parking. Dans ce cas, lors d'une connexion entre le véhicule connecté 10 et le parking 80, un module de connexion 50 reçoit les données de connexion 250 comportant au moins une requête d'autorisation 253. Ces données peuvent être envoyées par exemple par le véhicule connecté 10 ou le parking 80. Le module de connexion 50, ayant accès à la chaine à blocs 200, identifie 530, dans les données d'exécution de contrat intelligent 240 inscrites sur la chaine à blocs 200, une autorisation conditionnelle 243 complémentaire à la requête d'autorisation 253. Le module de connexion 50 vérifie ensuite si les conditions d'application sont vérifiées (par exemple le taux d'occupation du parking et le statut de l'abonnement du véhicule au service de parking) puis le cas échéant génère une instruction d'attribution d'autorisation 220 faisant droit à la requête d'autorisation d'accès au parking.

De façon alternative, le véhicule peut souhaiter entrer dans un parking sans avoir au préalable souscrit à un service d'abonnement. Dans ce cas, suite à la connexion entre le véhicule connecté 10 et le parking 80, le véhicule ou un tiers procède à un paiement (PAI) à la société de gestion de service du parking 70. Ce paiement est inscrit sur un noeud de la chaine à blocs puis un nouveau bloc comportant cette inscription est enregistré (INS). Le module de connexion 50 reçoit les données de connexion 250 comportant au moins une requête d'autorisation 253. Le module de connexion 50, ayant accès à la chaine à blocs 200, identifie 530, dans les données d'exécution de contrat intelligent 240 inscrites sur la chaine à blocs 200, une autorisation conditionnelle 243 complémentaire à la requête d'autorisation 253. Le module de connexion 50 vérifie ensuite si les conditions d'application sont vérifiées (ici par exemple le paiement) puis le cas échéant génère une instruction d'attribution d'autorisation 220 faisant droit à la requête d'autorisation d'accès au parking.

Ainsi, le système selon l'invention regroupe les avantages de décentralisation et de distribution des chaines à blocs tout en conservant la sécurité des systèmes centralisés. Du fait de tous ces avantages, il est possible d'établir la confiance entre plusieurs acteurs qui ont des intérêts et une gouvernance propre au sein d'un référentiel distribué et partagé.

## Revendications

1. Système informatique (1) de création d'autorisations, d'attributions et de gestion desdites d'autorisations pour des objets connectés (10) comportant :
- une pluralité de serveurs de stockage (20) comprenant une chaine à blocs (200) distribuée sous la forme de noeuds de stockage (201), lesdits serveurs de stockage étant aptes à enregistrer un nouveau bloc (202) sur la chaine à blocs (200) ;
- un module de contrôle d'accès (30) étant configuré pour créer un droit d'accès à la chaine à blocs (200), pour un utilisateur (60) du système, ledit droit d'accès étant sélectionné parmi une liste comprenant au moins :
∘ un droit d'accès comportant seulement un droit de lecture, et
∘ un droit d'accès comportant un droit d'enregistrement de nouveaux blocs (202) de la chaine à blocs (200) sur un noeud de stockage (201), l'utilisateur (60) possédant un tel droit étant appelé une entité de gouvernance (70) ;
- un module d'inscription (40) pour la création d'autorisation apte à :
∘ recevoir des données d'exécution de contrat intelligent (240), émises par une entité de gouvernance (70), lesdites données d'exécution de contrat intelligent (240) comportant un identifiant unique (241) du contrat intelligent, des conditions d'applications (242) du contrat intelligent et au moins une autorisation conditionnelle (243) associée au contrat intelligent, et
∘ inscrire lesdites données d'exécution de contrat intelligent (240) sur un noeud de stockage (201) de ladite chaine à blocs (200) ; et
- un module de connexion (50) pour l'attribution d'autorisation apte à :
∘ recevoir des données de connexion (250) entre un objet connecté (10) et une entité tiers (80), lesdites données de connexion (250) comportant au moins une requête d'autorisation (253),
∘ identifier sur un noeud de stockage (201) de la chaine à blocs (200) une autorisation conditionnelle (243) complémentaire à ladite requête d'autorisation (253),
∘ vérifier les conditions d'applications (242) comprises dans les données d'exécution de contrat intelligent (240), et
∘ générer une instruction d'attribution d'autorisation (220) faisant droit à la requête d'autorisation (253) seulement si toutes les conditions d'applications (242) de ladite autorisation conditionnelle (243) sont vérifiées.

2. Système selon la revendication 1 **caractérisé en ce que** le module de connexion (50) est en outre apte à enregistrer l'instruction d'attribution d'autorisation (220) sur la chaine à blocs (200).

3. Système selon l'une des revendications 1 ou 2 **caractérisé en ce que** le module de connexion (50) est apte à transmettre l'instruction d'attribution d'autorisation à une machine virtuelle pour son exécution.

4. Système selon l'une quelconque des revendications 1 à 3 **caractérisé en ce que** la chaine à blocs (200) comporte des données chiffrées et des données non chiffrées.

5. Système selon l'une quelconque des revendications 1 à 4 **caractérisé en ce que** la chaine à blocs (200) comporte des données d'objet (210) relatives audit objet connecté (10), lesdites données d'objet comportant au moins : un identifiant unique d'objet (211) et un profil d'objet (212).

6. Système selon l'une quelconque des revendications 1 à 5 **caractérisé en ce que** le profil d'objet (212) comporte des données pouvant être sélectionnées parmi son statut, son origine, ses caractéristiques physiques, ses fonctionnalités ou ses permissions.

7. Système selon l'une quelconque des revendications 1 à 6 **caractérisé en ce que** la chaine à blocs (200) comporte des données de tiers (280) relatives à ladite entité tiers (80), lesdites données de tiers comportant au moins : un identifiant unique de tiers (281) et un profil de tiers (282).

8. Système selon l'une quelconque des revendications 1 à 7 **caractérisé en ce que** l'entité tiers (80) est sélectionné parmi : un autre objet connecté, un utilisateur, une donnée, un fichier ou un ensemble de fichier ou un service par exemple sous la forme d'une application.

9. Système selon l'une quelconque des revendications 1 à 8 **caractérisé en ce que** l'objet connecté (10) comporte au moins un contrôleur logique ou physique et est sélectionné parmi : une vanne connectée, un véhicule connecté et un interrupteur connecté.

10. Système selon l'une quelconque des revendications 1 à 9 **caractérisé en ce qu'**au moins une partie des données de tiers (280), d'exécution de contrat intelligent (240) et/ou des données d'objet (210) sont chiffrées avant enregistrement sur un noeud de stockage (201) de la chaine à blocs (200).

11. Système selon l'une quelconque des revendications 1 à 10 **caractérisé en ce que** les conditions d'applications (242) comportent des conditions sélectionnées parmi : une condition de paiement, une condition temporelle, une condition de localisation et une condition de sécurité.

12. Système selon l'une quelconque des revendications 1 à 11 **caractérisé en ce que** le module de connexion (50) est apte à vérifier en priorité les conditions d'applications (242) les plus récentes.

13. Système selon l'une quelconque des revendications 1 à 12 **caractérisé en ce que** l'instruction d'attribution d'autorisation (220) est sélectionnée parmi : rupture de l'association entre l'objet connecté (10) et l'entité tiers (80) associée, autoriser l'accès par l'objet connecté (10) à un service de l'entité tiers (80), et autoriser l'accès par l'entité tiers (80) à une fonctionnalité ou des données de l'objet connecté (10).

14. Procédé (2) de création et de gestion d'autorisations pour objets connectés (10), mis en oeuvre par un système informatique comprenant une chaine à blocs (200) distribuée sous la forme de noeuds de stockage (201), lesdits serveurs de stockage (20) étant aptes à enregistrer un nouveau bloc (202) sur la chaine à blocs (200), un module de contrôle d'accès (30), un module d'inscription (40), et un module de connexion (50), ledit procédé comprenant les étapes de :
- Définition (320), par le module de contrôle d'accès (30), d'un droit d'accès à la chaine à blocs (200), pour un utilisateur (60), ledit droit d'accès étant sélectionné parmi une liste comprenant au moins :
∘ un droit d'accès comportant seulement un droit de lecture, et
∘ un droit d'accès comportant un droit d'enregistrement de nouveaux blocs (202) de la chaine à blocs (200), l'utilisateur (60) possédant un tel droit étant appelé une entité de gouvernance (70) ;
- Réception (410), par le module d'inscription (40), de données d'exécution de contrat intelligent (240) émises par une entité de gouvernance (70), lesdites données d'exécution de contrat intelligent (240) comportant un identifiant unique (241) du contrat intelligent, des conditions d'applications (242) du contrat intelligent et au moins une autorisation conditionnelle (243) associée au contrat intelligent,
- Inscription (430) desdites données d'exécution de contrat intelligent (240) sur un noeud de stockage (201) de ladite chaine à blocs (200),
- Réception (510), par le module de connexion (50), de données de connexion (250), lesdites données de connexion (250) comportant au moins une requête d'autorisation (253),
- Identification (530) d'une autorisation conditionnelle (243) complémentaire à ladite requête d'autorisation (253) dans les données d'exécution du contrat intelligent (240), inscrites sur un noeud de stockage (201) de la chaine à blocs (200), ladite autorisation conditionnelle (243) étant associée à des conditions d'applications (242),
- Vérification (540) desdites conditions d'applications (242) comprises dans les données d'exécution du contrat intelligent (240), et
- Génération (550) d'une instruction d'attribution d'autorisation (220) faisant droit à la requête d'autorisation (253) seulement si toutes les conditions d'applications (242) de ladite autorisation conditionnelle (243) sont vérifiées.

## Patentansprüche

1. Informatiksystem (1) zur Erzeugung von Genehmigungen, von Vergaben und zur Verwaltung um Genehmigungen für verbundene Objekte (10), umfassend:
- mehrere Speicherungsserver (20), die eine in der Form von Speicherungsknoten (201) verteilte Blockchain (200) umfassen, wobei die Speicherungsserver geeignet sind, einen neuen Block (202) auf der Blockchain (200) zu speichern;
- ein Zugriffskontrollmodul (30), das ausgestaltet ist, um eine Zugriffsberechtigung auf die Blockchain (200) für einen Benutzer (60) des Systems zu erzeugen, wobei die Zugriffsberechtigung unter einer Liste ausgewählt wird, die mindestens Folgendes umfasst:
∘ eine Zugriffsberechtigung, die nur eine Leseberechtigung umfasst, und
∘ eine Zugriffsberechtigung, die eine Berechtigung zur Speicherung neuer Blöcke (202) der Blockchain (200) auf einem Speicherungsknoten (201) umfasst, wobei der Benutzer (60), der über eine solche Berechtigung verfügt, eine Governance-Entität (70) genannt wird;
- ein Eintragungsmodul (40) für die Genehmigungserzeugung, das für Folgendes geeignet ist:
∘ Empfangen von Ausführungsdaten eines intelligenten Vertrags (240), die durch eine Governance-Entität (70) ausgegeben werden, wobei die Ausführungsdaten des intelligenten Vertrags (240) eine eindeutige Kennung (241) des intelligenten Vertrags, Anwendungsbedingungen (242) des intelligenten Vertrags und mindestens eine bedingte Genehmigung (243), die dem intelligenten Vertrag zugehörig ist, umfassen, und
∘ Eintragung der Ausführungsdaten des intelligenten Vertrags (240) auf einem Speicherungsknoten (201) der Blockchain (200); und
- ein Verbindungsmodul (50) für die Genehmigungsvergabe, das für Folgendes geeignet ist:
∘ Empfang von Verbindungsdaten (250) zwischen einem verbundenen Objekt (10) und einer Drittentität (80), wobei die Verbindungsdaten (250) mindestens eine Genehmigungsanforderung (253) umfassen,
∘ Identifizierung einer bedingten Genehmigung (243), die die Genehmigungsanforderung (253) ergänzt, auf einem Speicherungsknoten (201) der Blockchain (200),
∘ Prüfung der Anwendungsbedingungen (242), die in den Ausführungsdaten des intelligenten Vertrags (240) enthalten sind, und
∘ Erzeugung eines Genehmigungvergabebefehls (220), der der Genehmigungsanforderung (253) nur stattgibt, wenn alle Anwendungsbedingungen (242) der bedingten Genehmigung (243) überprüft sind.

2. System nach Anspruch 1, **dadurch gekennzeichnet, dass** das Verbindungsmodul (50) ferner geeignet ist, den Genehmigungsvergabebefehl (220) auf der Blockchain (200) zu speichern.

3. System nach einem der Ansprüche 1 oder 2, **dadurch gekennzeichnet, dass** das Verbindungsmodul (50) geeignet ist, den Genehmigungsvergabebefehl an eine virtuelle Maschine für seine Ausführung zu übertragen.

4. System nach einem der Ansprüche 1 bis 3, **dadurch gekennzeichnet, dass** die Blockchain (200) verschlüsselte Daten und unverschlüsselte Daten umfasst.

5. System nach einem der Ansprüche 1 bis 4, **dadurch gekennzeichnet, dass** die Blockchain (200) Objektdaten (210) umfasst, die das verbundene Objekt (10) betreffen, wobei die Objektdaten mindestens Folgendes umfassen: eine eindeutige Objektkennung (211) und ein Objektprofil (212).

6. System nach einem der Ansprüche 1 bis 5, **dadurch gekennzeichnet, dass** das Objektprofil (212) Daten umfasst, die unter seinem Status, seinem Ursprung, seinen physikalischen Eigenschaften, seinen Funktionalitäten oder seinen Berechtigungen ausgewählt werden können.

7. System nach einem der Ansprüche 1 bis 6, **dadurch gekennzeichnet, dass** die Blockchain (200) Daten von Dritten (280) umfasst, die die Drittentität (80) betreffen, wobei die Daten von Dritten mindestens Folgendes umfassen: eine eindeutige Kennung von Dritten (281) und ein Profil von Dritten (282).

8. System nach einem der Ansprüche 1 bis 7, **dadurch gekennzeichnet, dass** die Drittentität (80) unter Folgendem ausgewählt wird: einem anderen verbundenen Objekt, einem Benutzer, einem Datenelement, einer Datei oder einer Dateimenge oder einem Dienst, zum Beispiel in der Form einer Anwendung.

9. System nach einem der Ansprüche 1 bis 8, **dadurch gekennzeichnet, dass** das verbundene Objekt (10) mindestens eine logische oder physikalische Steuereinrichtung umfasst und unter Folgendem ausgewählt wird: einem verbundenen Ventil, einem verbundenen Fahrzeug und einem verbundenen Schalter.

10. System nach einem der Ansprüche 1 bis 9, **dadurch gekennzeichnet, dass** mindestens ein Teil der Daten von Dritten (280), der Ausführung des intelligenten Vertrags (240) und/oder der Objektdaten (210) vor der Speicherung auf einem Speicherungsknoten (201) der Blockchain (200) verschlüsselt wird.

11. System nach einem der Ansprüche 1 bis 10, **dadurch gekennzeichnet, dass** die Anwendungsbedingungen (242) Bedingungen umfassen, die unter Folgendem ausgewählt werden: einer Zahlungsbedingungen, einer zeitlichen Bedingung, einer Ortsbedingung und einer Sicherheitsbedingung.

12. System nach einem der Ansprüche 1 bis 11, **dadurch gekennzeichnet, dass** das Verbindungsmodul (50) geeignet ist, die neuesten Bedingungen von Anwendungen (242) prioritär zu prüfen.

13. System nach einem der Ansprüche 1 bis 12, **dadurch gekennzeichnet, dass** der Genehmigungsvergabebefehl (220) unter Folgendem ausgewählt wird: Bruch der Verknüpfung zwischen dem verbundenen Objekt (10) und der verknüpften Drittentität (80), Genehmigung des Zugriffs durch das verbundene Objekt (10) auf einen Dienst der Drittentität (80) und Genehmigung des Zugriffs durch die Drittentität (80) auf eine Funktionalität oder Daten des verbundenen Objekts (10).

14. Verfahren (2) zur Erzeugung und Verwaltung von Genehmigungen für verbundene Objekte (10), das durch ein Informatiksystem durchgeführt wird, das eine Blockchain (200), die in der Form von Speicherungsknoten (201) verteilt ist, wobei die Speicherungsserver (20) geeignet sind, einen neuen Block (202) auf der Blockchain (200) zu speichern, ein Zugriffskontrollmodul (30), ein Eintragungsmodul (40) und ein Verbindungsmodul (50) umfasst, wobei das Verfahren die folgenden Schritte umfasst:
- Definition (320) einer Zugriffsberechtigung auf die Blockchain (200) für einen Benutzer (60) durch das Zugriffskontrollmodul (30), wobei die Zugriffsberechtigung in einer Liste ausgewählt wird, die mindestens Folgendes umfasst:
∘ eine Zugriffsberechtigung, die nur eine Leseberechtigung umfasst, und
∘ eine Zugriffsberechtigung, die eine Berechtigung zur Speicherung neuer Blöcke (202) der Blockchain (200) umfasst, wobei der Benutzer (60), der über eine solche Berechtigung verfügt, eine Governance-Entität (70) genannt wird;
- Empfang (410) von Ausführungsdaten eines intelligenten Vertrags (240), die durch eine Governance-Entität (70) ausgegeben werden, durch das Eintragungsmodul (40), wobei die Ausführungsdaten des intelligenten Vertrags (240) eine eindeutige Kennung (241) des intelligenten Vertrags, Anwendungsbedingungen (242) des intelligenten Vertrags und mindestens eine bedingte Genehmigung (243) umfassen, die dem intelligenten Vertrag zugehörig ist,
- Eintragung (430) der Ausführungsdaten des intelligenten Vertrags (240) auf einem Speicherungsknoten (201) der Blockchain (200),
- Empfang (510) von Verbindungsdaten (250) durch das Verbindungsmodul (50), wobei die Verbindungsdaten (250) mindestens eine Genehmigungsanforderung (253) umfassen,
- Identifikation (530) einer bedingten Genehmigung (243), die die Genehmigungsanforderung (253) ergänzt, in den Ausführungsdaten des intelligenten Vertrags (240), die auf einem Speicherungsknoten (201) der Blockchain (200) eingetragen sind, wobei die bedingte Genehmigung (243) mit Anwendungsbedingungen (242) verknüpft ist,
- Prüfung (540) der Anwendungsbedingungen (242), die in den Ausführungsdaten des intelligenten Vertrags (240) enthalten sind, und
- Erzeugung (550) eines Genehmigungsvergabebefehls (220), der der Genehmigungsanforderung (253) nur stattgibt, wenn alle Anwendungsbedingungen (242) der bedingten Genehmigung (243) geprüft sind.

## Claims

1. A computing system (1) for creating authorizations, allocations and for managing said authorizations for connected objects (10) comprising:
- a plurality of storage servers (20) comprising a blockchain (200) distributed in the form of storage nodes (201), said storage servers being able to record a new block (202) on the blockchain (200);
- an access controlling module (30) being configured to create an access right to the blockchain (200), for a user (60) of the system, said access right being selected from a list comprising at least:
∘ an access right only comprising a read access, and
∘ an access right comprising a right to record new blocks (202) of the blockchain (200) on a storage node (201), the user (60) having such a right being a governing entity (70);
- a write module (40) for creating authorization able to:
∘ receive smart contract execution data (240) issued by a governing entity (70), said smart contract execution data (240) comprising a unique identifier (241) of the smart contract, application conditions (242) of the smart contract and at least one conditional authorization (243) associated with the smart contract, and
∘ write said smart contract execution data (240) on a storage node (201) of said blockchain (200); and
- a connection module (50) for allocating authorization able to:
∘ receive connection data (250) between a connected object (10) and a third-party entity (80), said connection data (250) comprising at least one authorization request (253),
∘ identify on a storage node (201) of the blockchain (200), a conditional authorization (243) complementary to said authorization request (253),
∘ verify the application conditions (242) comprised in the smart contract execution data (240), and
∘ generate an authorization allocation instruction (220) acceding to the authorization request (253) only if all the application conditions (242) of said conditional authorization (243) are verified.

2. The system according to claim 1, **characterized in that** the connection module (50) is further able to record the authorization allocation instruction (220) on the blockchain (200) .

3. The system according to one of claims 1 or 2, **characterized in that** the connection module (50) is able to transmit the authorization allocation instruction to a virtual machine for execution thereof.

4. The system according to any one of claims 1 to 3, **characterized in that** the blockchain (200) comprises encrypted data and non-encrypted data.

5. The system according to any one of claims 1 to 4, **characterized in that** the blockchain (200) comprises object data (210) relating to said connected object (10), said object data comprising at least: an object unique identifier (211) and an object profile (212).

6. The system according to any one of claims 1 to 5, **characterized in that** the object profile (212) comprises data that can be selected from status, origin, physical characteristics, functionalities, or permissions thereof.

7. The system according to any one of claims 1 to 6, **characterized in that** the blockchain (200) comprises third-party data (280) relating to said third-party entity (80), said third-party data comprising at least: a third-party unique identifier (281) and a third-party profile (282).

8. The system according to any one of claims 1 to 7, **characterized in that** the third-party entity (80) is selected from: another connected object, a user, a datum, a file or set of files, or a service, for example in the form of an application.

9. The system according to any one of claims 1 to 8, **characterized in that** the connected object (10) comprises at least one logic or physical controller and is selected from: a connected valve, a connected vehicle and a connected switch.

10. The system according to any one of claims 1 to 9, **characterized in that** at least a part of the third-party data (280), the smart contract execution data (240) and/or the object data (210) are encrypted before being recorded on a storage node (201) of the blockchain (200).

11. The system according to any one of claims 1 to 10, **characterized in that** the application conditions (242) comprise conditions selected from: a payment condition, a time condition, a location condition and a security condition.

12. The system according to any one of claims 1 to 11, **characterized in that** the connection module (50) is able to verify in priority the most recent application conditions (242).

13. The system according to any one of claims 1 to 12, **characterized in that** the authorization allocation instruction (220) is selected from: a severing of the association between the connected object (10) and the associated third-party entity (80), an authorization given to the connected object (10) to access a service of the third-party entity (80), and an authorization given to the third-party entity (80) to access a functionality or data of the connected object (10).

14. A method (2) for creating and managing authorizations for connected objects (10), implemented by a computing system comprising a blockchain (200) distributed in the form of storage nodes (201), said storage servers (20) being able to record a new block (202) on the blockchain (200), an access controlling module (30), a write module (40), and a connection module (50), said method comprising the steps of:
- defining (320), by the access controlling module (30), an access right to the blockchain (200), for a user (60), said access right being selected from a list comprising at least:
∘ an access right only comprising a read access, and
∘ an access right comprising a right to record new blocks (202) of the blockchain (200), the user (60) having such a right being a governing entity (70);
- receiving (410), by the write module (40), smart contract execution data (240) issued by a governing entity (70), said smart contract execution data (240) comprising a unique identifier (241) of the smart contract, application conditions (242) of the smart contract and at least one conditional authorization (243) associated with the smart contract,
- writing (430) said smart contract execution data (240) on a storage node (201) of said blockchain (200),
- receiving (510) connection data (250), by the connection module (50), said connection data (250) comprising at least one authorization request (253),
- identifying (530) a conditional authorization (243) complementary to said authorization request (253) in the smart contract execution data (240), written on a storage node (201) of the blockchain (200), said conditional authorization (243) being associated with application conditions (242),
- verifying (540) said application conditions (242) comprised in the smart contract execution data (240), and
- generating (550) an authorization allocation instruction (220) acceding to the authorization request (253) only if all the application conditions (242) of said conditional authorization (243) are verified.
